(19) Europäisches Patentamt
European Patent Office
Office européen des brevets

(11) **EP 2 749 141 B1**

(12) **EUROPEAN PATENT SPECIFICATION**

(45) Date of publication and mention
of the grant of the patent:
**10.01.2018 Bulletin 2018/02**

(51) Int Cl.:
**G01B 11/14** *(2006.01)*    **H05B 37/02** *(2006.01)*

(21) Application number: **12799315.2**

(22) Date of filing: **09.11.2012**

(86) International application number:
**PCT/IB2012/056291**

(87) International publication number:
**WO 2013/072826 (23.05.2013 Gazette 2013/21)**

(54) **CODED LIGHT TRANSMISSION AND RECEPTION FOR LIGHT SCENE CREATION**

KODIERTE ÜBERTRAGUNG UND KODIERTER EMPFANG VON LICHT ZUR ERZEUGUNG VON LICHTSZENEN

TRANSMISSION ET RÉCEPTION DE LUMIÈRE CODE POUR CRÉATION DE SCÈNE LUMINEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2011 US 201161559781 P**

(43) Date of publication of application:
**02.07.2014 Bulletin 2014/27**

(73) Proprietor: **Philips Lighting Holding B.V.**
**5656 AE Eindhoven (NL)**

(72) Inventors:
• **CUPPEN, Roel Peter Geert**
**5656 AE Eindhoven (NL)**
• **BERKVENS, Winfried Antonius Henricus**
**5656 AE Eindhoven (NL)**
• **BROSENS- KESSELS, Angelique Carin Johanna Maria**
**5656 AE Eindhoven (NL)**

(74) Representative: **van Eeuwijk, Alexander Henricus Waltherus et al**
**Philips Lighting B.V.**
**Philips Lighting Intellectual Property**
**High Tech Campus 45**
**5656 AE Eindhoven (NL)**

(56) References cited:
WO-A1-2010/035192    WO-A2-2006/111930
WO-A2-2008/065607    AT-A2- 510 104
US-A1- 2004 174 326    US-A1- 2010 320 922

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a coded light system. Particularly it relates to methods and devices for synchronization of light sources in a coded light system.

BACKGROUND OF THE INVENTION

Light sources are nowadays applied in lighting systems consisting of a large number of light sources. Since the introduction of solid state lighting several parameters of these light sources can be varied and controlled in a system of light sources. Such parameters include light intensity, light color, spot width, light color temperature and even light direction. As an example, current state of the art light sources may be able to produce several million colors. By varying and controlling these parameters of the different light sources, a light designer or user of the system is enabled to generate lighting scenes, for example to create personalized atmospheres. These dynamic light scenes could be functional (*inter alia* to keep people energized and active) or esthetical (*inter alia* to provide an attractive flow of color and intensity changes in a room). The process of varying and controlling parameters is often referred to as scene setting, and is typically quite a complex process due to the multitude of light sources and parameters to be controlled.

In addition, it is expected that with this increasing flexibility also the complexity of creating lighting scenes will grow. This has created a need for systems that enable simple lighting scene creation and variation by developing, for example, easy-to-use user interfaces and novel architectures. Typically one controller, or control channel, is required for each single light source. This makes it difficult to control a system of more than ten light sources. For the same reason it may also be difficult to synchronize the light emitted by the light sources.

A spatially uniform dynamic flow could be realized by using radio based techniques for near filed communications. Examples include the use of ZigBee compatible platforms (ZigBee is based on the IEEE 802.15.4 standard) or Z-wave platforms (Z-Wave operates in the sub-gigahertz frequency range, around 900 MHz) within the light sources. Synchronization techniques that can be used includes the network time protocol (NTP). This may lead to synchronized clocks in the light sources. This may further solve the problem of synchronization of the different light sources in a spatially uniform dynamic flow. However, this approach does not solve the problem for a specific light source regarding when and what light effect it has to create within a spatially patterned dynamic flow.

Furthermore, there are solutions to realize a spatially patterned dynamic flow, made possible for example by using digital multiplex (DMX512 or DMX512-A) applications or applications with a digital addressable lighting interface (Dali). However, in these solutions the user has to manually link the locations of each light source to its position in the dynamic flow. The patent document WO-A1-2010/035192 shows a lighting system having a plurality of light sources for creating lighting scenes. The light sources can emit coded light, which is both spatially and temporally coded. A light pattern capturing device captures the emitted coded light and transmits the data embedded in it to a lighting system controller. The gathered information can be used to determine spacing of the light sources, e.g. when multichannel wallwashers have been mounted with a certain distance to each other. This information is stated to be valuable for calculation of smooth colour interpolation scenes.

SUMMARY OF THE INVENTION

User tests, involving colored dynamic lighting in a home environment have indicated that the most preferred dynamic lighting scenes cover a large area in which the involved light sources are not completely synchronized over time, but a bit out of phase, so that next to the temporal pattern also a spatial pattern is visible. In order to optimize such dynamic scene, it may be required that the spatial pattern of the dynamic flow is also aligned with the spatial distribution of the light sources. If this is not the case, the dynamic flow may be be distorted and the dynamics will seem to form a random change of values which in general is not desired by users.

It is an object of the present invention to overcome this problem, and to provide methods, devices and system concepts which correctly generates a spatially patterned dynamic flow on multiple light sources by using coded light to automatically retrieve the relative locations of the light sources and therefore automatically position them correctly in the pattern of the dynamic flow.

Generally, the above objectives are achieved by methods and devices according to the attached independent claims.

According to a first aspect, the above objects are achieved by a light source in a coded lighting system, comprising: a light detector arranged to receive light and to determine a received intensity level $I_m$ of the received light; and a light decoder having access to information pertaining to a light effect pattern f(t) and being arranged to: from the received light, decode a coded light message embedded in the received light, in the decoded coded light message identify a timestamp, from the determined intensity level, the timestamp, and the information pertaining to the light effect pattern, determine a distance value to an emission point of the received light.

Advantageously, a light source is thereby able to determine the distance between itself and the light source from which it receives light and out of which it decodes the coded message based on the received time of emission $t_0$, the stored (dynamic) light effect pattern f(t), and the measured intensity $I_m$. This provides a more accurate determination than to localize the (relative) positions of the light sources, such as received signal strength indicator (rssi) measurement according to the IEEE 802.11 standard. This also provides a less expensive system than determination based on vision technology.

According to a second aspect, the above objects are achieved by a method in a light source in a coded lighting system, comprising: receiving light and determining a received intensity level $I_m$ of the received light; accessing information pertaining to a light effect pattern f(t); decoding, from the received light, a coded light message embedded in the received light; identifying a timestamp in the decoded coded light message; and determining, from the determined intensity level, the timestamp, and the information pertaining to the light effect pattern, a distance value to an emission point of the received light.

According to a third aspect, the above objects are achieved by a coded lighting system, comprising a first light source, comprising: a light driver arranged to form a coded light message, the coded light message comprising a timestamp, and a light emitter placed at an emission point of the first light source and arranged to emit light according to a light effect pattern, the emitted light comprising the coded light message; and a second light source, comprising: a light detector arranged to receive the light and to determine a received intensity level $I_m$ of the received light; and a light decoder having access to information pertaining to the light effect pattern and being arranged to: from the received light, decode the coded light message embedded in the received light, in the decoded coded light message identify the timestamp, from the determined intensity level, the timestamp, and the information pertaining to the light effect pattern, determine a distance value to the emission point of the received light.

It is noted that the invention relates to all possible combinations of features recited in the claims. Likewise, the advantages of the first aspect applies to the second aspect and the third aspect, and vice versa.

BRIEF DESCRIPTION OF THE DRAWINGS

This and other aspects of the present invention will now be described in more detail, with reference to the appended drawings showing embodiment(s) of the invention.

>    Fig. 1 is a lighting system according to an embodiment;
>    Fig. 2 is a light source according to an embodiment;
>    Fig. 3 is luminary according to an embodiment;
>    Fig. 4 is a lighting system according to an embodiment; and
>    Fig. 5 is a flowchart according to embodiments.

DETAILED DESCRIPTION

The below embodiments are provided by way of example so that this disclosure will be thorough and complete, and will fully convey the scope of the invention to those skilled in the art. Like numbers refer to like elements throughout.

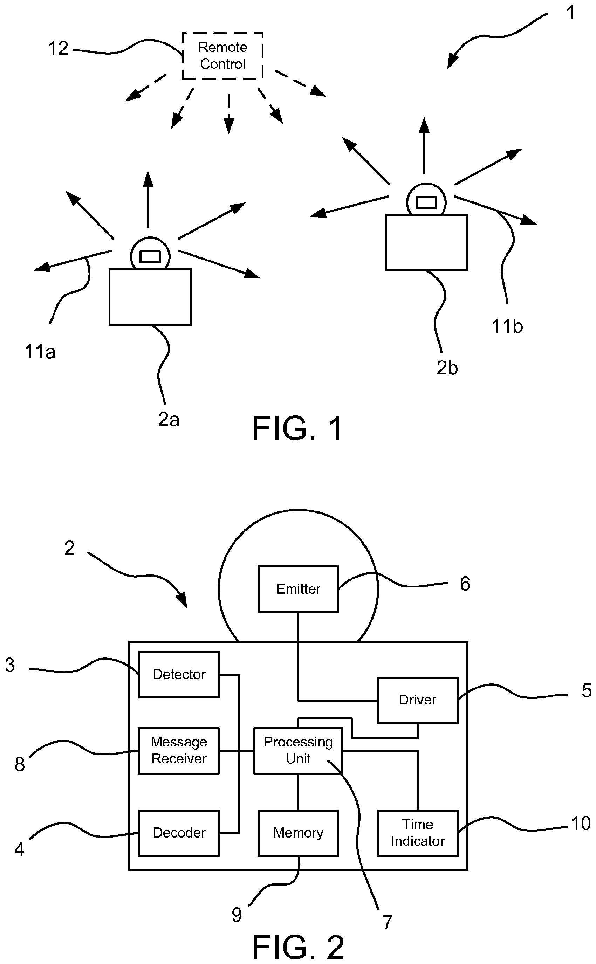

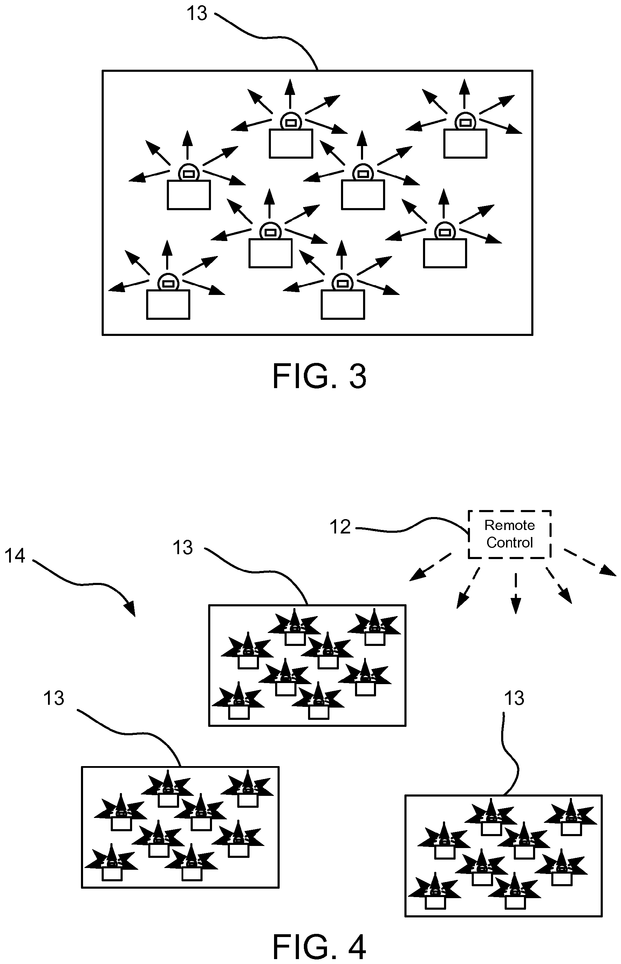

The present invention is concerned with the operation of a single light source (as in Fig. 2), or luminary (as in Fig. 3), which is arranged to display a dynamic flow f(t) as a function of time t. The dynamic flow may also be denoted as a light effect pattern. The dynamics flow, or light effect pattern, may in principle relate to a time variation of color, color temperature, intensity, beam shape, and/or beam direction, etc. of the light emitted by the luminary or light source. Thus the dynamics flow, or light effect pattern determines the color, intensity, beam shape, and/or beam direction, etc. of the light emitted by the luminary or light source as a function of time.

A lighting system comprising multiple luminaries (as in Fig. 4), or light sources (as in Fig. 1), may also display such a dynamic flow or light effect pattern. Due to the fact that the multitude of luminaries is spatially distributed (for example the luminaries, or light sources, may be physically distributed over a ceiling and/or wall of an interior space) two situations have been distinguished: (i) all luminaries display the same value of the dynamic flow f(t) at every instance of time t (i.e. a spatially uniform dynamic flow), and (ii) the value displayed by individual luminaries depends on both their physical position and time f(r,t) (i.e. spatially patterned dynamic flow) where r relates to a physical position. In the later case, it may be important that the spatial pattern of the dynamic flow is also aligned with the spatial distribution (i.e. physical location) of the luminaries, or light sources in order to correctly create the desired spatially patterned dynamic flow or light effect pattern.

Fig. 1 illustrates a lighting system 1 comprising at least two light sources, schematically denoted by reference numerals 2a and 2b. Such a lighting system may also be called an illumination system. The light sources 2a, 2b may be part of a light communications system, thus the lighting system 1 may be denoted as a coded lighting system. It should be noted that the term "light source" means a device that is used for providing light in a space, for purpose of illuminating objects in the space. Examples of such light providing devices include lighting devices and luminaires. A space is in this context typically an apartment room or an office room, a gym hall, a room in a public place or a part of an outdoor environment, such as a part of a street. Each light source 2a, 2b is capable of emitting light, as schematically illustrated by arrows 11a and 11b.

The emitted light 11a, 11b comprises a modulated part associated with coded light comprising a coded light message. The coded light message is thus embedded in the emitted light. The emitted light may also comprise an un-modulated part associated with an illumination contribution. Each light source 2a, 2b may be associated with a number of lighting settings, *inter alia* pertaining to the illumination contribution of the light source, such as color, color temperature and intensity of the emitted light. The dynamic flow, or light effect pattern, may be defined as a time variation of one or more of the lighting settings. In order to emit such a time-varying light output each light source 2a, 2b may therefore have access to information pertaining to the dynamic flow or light effect pattern $f(t)$. In general terms the illumination contribution of the light source may be defined as a time-averaged output of the light emitted by the light sources 2a, 2b.

As noted above, a dynamic light scene (defined by time variation of one or more of the above disclosed lighting settings) in which multiple light sources 2a, 2b are involved has to be aligned between the different light sources 2a, 2b in order to optimize its attractiveness. Dynamic effects which are not aligned properly between the different light sources 2a, 2b may have an unintended effect and may therefore lead to dissatisfaction and disillusionment of users. User tests, involving colored dynamic lighting in an home environment, have indicated that the most preferred dynamic flows cover a large area (spatial dynamic flow) in which the involved light sources 2a, 2b are not completely synchronized over time, but a bit out of phase. In other words, the different light sources 2a, 2b do not have the same values at the same time (spatially uniform dynamic flow), but follow a pattern over time with each individual light source 2a, 2b at a different point in this pattern (spatially patterned dynamic flow). This means that next to the temporal pattern also a spatial pattern is visible from a group of light sources 2a, 2b.

One way of realizing this alignment is by commissioning the light sources 2a, 2b in an initialization phase, and then creating $f(r,t)$ based on the known positions of the individual light sources 2a, 2b. Commissioning may for example be performed by the remote control unit 12. One drawback of this approach is that the manual commissioning has to be redone each time a luminary or light source has been moved or a new luminary or light source has been added to the lighting system. In addition, light source configuration (number of light sources and location of light sources) may change from room to room. In order to correctly create a spatially patterned dynamic flow over multiple light sources 2a, 2b, it may be important that the spatial pattern of the dynamic flow is also aligned with the spatial distribution of the lamps. If this is not the case, than the dynamic flow will be misaligned and the dynamics will seem to be a random change of values.

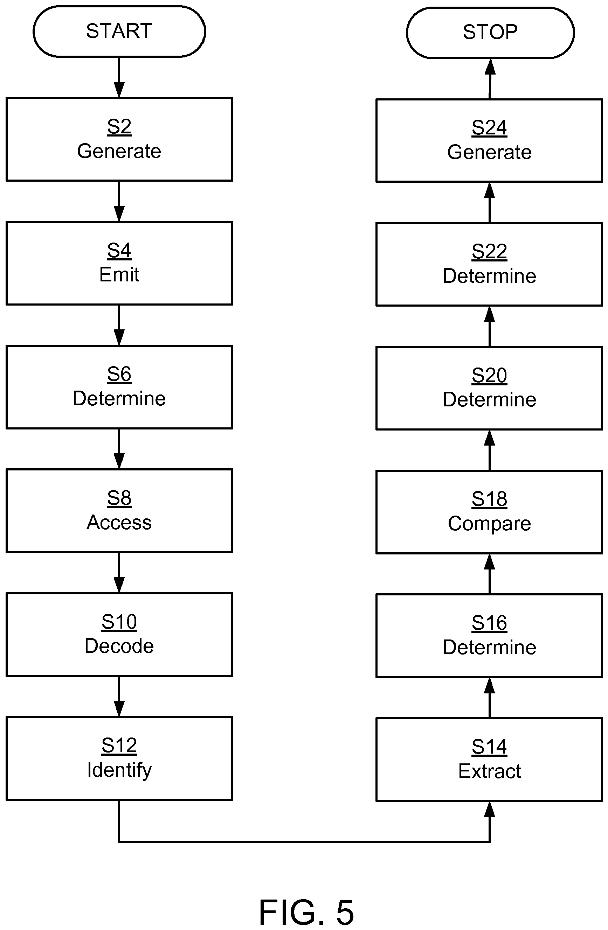

Operation to align the dynamic function $f(t)$ correctly between the different light sources 2a and 2b in the lighting system 1 will be disclosed next. In order to achieve this alignment the light sources 2a, 2b may be arranged to perform a number of functionalities. These functionalities will be described next with references to Fig. 1, Fig. 2 and the flowchart of Fig. 5.

Fig. 2 schematically illustrates in terms of functional blocks a light source 2, such as the light sources 2a, 2b of Fig. 1 disclosed above. The light source 2 may thus be configured to emit illumination light as well as coded light, wherein the coded light comprises a coded light message. The light source 2 comprises a light driver 5, a light emitter 6, a light detector 3 and a light decoder 4. At least part of the functionality of the light driver 5 and the light decoder 4 may be realized by a processing unit 7.

The light driver 5 is arranged to form a coded light message. Particularly it is arranged to form a coded light message comprising a timestamp. The timestamp is associated with the point in time $t_0$ at which the coded light message is (to be) emitted from the light source 2. Thus, in order to embed the timestamp in the coded message the light driver 5 needs access to the timestamp. The timestamp may be provided by an internal time indicator 10 or from an external time indicator, for example provided by the remote control unit 12. The internal time indicator 10 may be part of (or provided by) the processing unit 7. The internal time indicator 10 may furthermore be initialized by reception of a signal from a central time indicator, which may be comprised in the remote control unit 12. This may enable clock synchronization between individual light sources 2, 2a, 2b of the lighting system 1. Thus, in a step S02 one of the light sources 2a, 2b in the lighting system 1 generates the light value $f(t_0)$ and embeds in it a timestamp representing the point in time $t_0$. The intensity of the light value $f(t_0)$ could for example be a hue, saturation and brightness (HSB) value or an XY color space value. Further information of the light sources 2a, 2b may additionally be embedded in the transmitted coded light message *inter alia* for the purpose of improving the relative positioning between multiple light sources 2a, 2b. Further information embedded in the transmitted coded light may comprise properties relating to the type of light source 2a, 2b (*inter alia* halogen, FL, HID, LED, etc.), the direction of light (*inter alia* the amount of emitted light directed downwards or upwards in relation to the placement of the light source 2a, 2b), the maximum intensity of the emitted light, and the light pattern (point source, beam angle). The further information may be used by a light source 2, 2a, 2b receiving the emitted light to perform a correction on the intensity difference between the light source emitting the light and the light source receiving the light. The light source 2, 2a, 2b generating the light value $f(t_0)$ at the point in time $t_0$ is hereinafter denoted as the first light source and may be randomly chosen among the light sources 2a, 2b in the lighting system 1.

The light emitter 6 is associated with the illumination function of the light source 2 (i.e. for emitting the illumination light) and can be any suitable light source. For example, the light emitter 6 preferably comprises one or more LEDs, but it could as very well comprise one or more halogen, FL or HID sources, etc. The light emitter 6 is placed at an emission point of the light source 2 and is arranged to emit light. The light emitter 6 is driven by the light driver 5. The light emitter 6 may thus from the light driver 5 receive a control signal relating to the light to be emitted. The control signal may in particular relate to a light effect pattern according to which the light is to be emitted and also relate to the coded light message to be embedded in the emitted light. The light emitter 6 is thereby arranged to emit light according to the light effect pattern. Thus, in a step S04 coded light is emitted by the light source 2a, 2b in the lighting system 1 generating the light value $f(t_0)$ at the point in time to.

The light detector 3 is arranged to receive light emitted by at least one other light source. For example, in the exemplary lighting system 1 of Fig. 1 the light detector of the light source 2b is arranged to receive light emitted by the light emitter of the light source 2a and vice versa. The light source 2, 2a, 2b receiving light emitted by at least one other light source (i.e. from the first light source) is hereinafter denoted as the second light source. The light detector 3 is further arranged to determine a received intensity level $I_m$ of the received light, step S06. In general, the received intensity level $I_m$ of the received light is proportional to the strength of the received light. In order to determine the received intensity level $I_m$ the light detector 3 may comprise a photosensor or photodetector or any other suitable sensor of light. For example, the light detector 3 may comprise a charge-coupled device (CCD), CMOS sensor, a photodiode (*inter alia* a reverse biased LED), a phototransistor, a photoresistor, or the like. Thus, at least one of the light sources 2a, 2b in the lighting system 1 not generating the light value $f(t_0)$ at the point in time $t_0$ detects and thereby receives the coded light emitted by the emitting light source.

The light decoder 4 is arranged to from the light detector receive a signal indicative of the detected light, such as its waveform and its intensity. The light decoder 4 further has information pertaining to a number of light effect patterns, particularly the light effect pattern used by the light source emitting the light which the light detector 3 is arranged to receive; in a step S08 information pertaining to a light effect pattern f(t) is accessed. The light decoder 4 is thereby arranged to decode the coded light message embedded in the received light, step S10. Since the coded light message comprises the timestamp, the light decoder 4 is thereby also arranged to identify the timestamp in the received light, step S12. The light decoder may be arranged to, at a point in time of receiving the coded light message, compare the timestamp to an internal time indication of the light source. The timestamp in the coded light message may thereby be utilized to synchronize the internal clock of the receiving light source. Since the coded light message is transmitted by light, and thus at the speed of light the time delay of the coded light message from emitter to detector is substantially zero and thus the received timestamp can be readily used to synchronize the internal clock of the receiving light source with the internal clock of the light generating and emitting light source. Alternatively or additionally the internal time indicator 10 may be arranged to be initialized by reception of a signal from a central time indicator. In a step S14 the detecting and receiving light source 2a, 2b extracts the point in time $t_0$ from the timestamp in the coded light message. The point in time $t_0$ is then used in a step S16 by the detecting and receiving light source 2a, 2b to determine the light value $f(t_0)$ by using the light effect pattern f(t) evaluated at $t = t_0$. Knowing $t_0$ the received light intensity $I_m$ of the light effect received the detecting and receiving light source 2a, 2b can be determined at a certain point in the coded light message *inter alia* after a predefined synchronization sequence. The received light intensity $i_0$ and the determined light value $f(t_0)$ can then be compared in a step S18 by the detecting and receiving light source 2a, 2b by determining a difference $\Delta I$ between the received intensity $I_m$ and the evaluated intensity of $f(t_0)$, i.e. $\Delta I = f(t_0) - I_m$.

The determined intensity level, timestamp, and the information pertaining to the light effect pattern is then used in combination to determine a distance value to the emission point of the received light, step S20. The detecting and receiving light source 2a, 2b determines the relative distance between the detecting and receiving light source 2a, 2b and the light generating and emitting light source 2a, 2b based on the intensity difference $\Delta I$. The determined intensity level provides information relating to the overall scale of the envelope (or amplitude) of the received light. The information pertaining to the light effect pattern provides information relating to f(t). The timestamp provides information relating to which point(s) in the light effect pattern that the received light corresponds to. The distance value is thus advantageously proportional to the light effect pattern evaluated at a point in time $t_0$ defined by the timestamp and the determined received intensity level. Particularly, the distance value may be determined as $d = (I(f(t_0)) - I_m) \cdot \alpha$, where I(f(t0)) represents intensity of the light effect pattern f(t) evaluated at time $t_0$ and where $\alpha$ is a constant. Conditioned that information indicating the (maximum) emitted intensity level is embedded in the received coded light), also this information may be identified in the received light and used to determine the distance value.

In general, the light intensity may be said to decrease quadratic over the distance in an ideal environment. Assuming that the light intensity I is distributed as a sphere $4 \cdot d^2$ at distance d, the measured light intensity $I_m$ at distance d can be expressed as follows:

$$I_m = \frac{I}{4\pi \cdot d^2}$$

Solving this expression for d yields:

$$d = \sqrt{\frac{I_m \cdot I}{4\pi}}$$

As noted above, this expression holds for an ideal environment, i.e. without taking into account the light direction of the light source, or without taking into account properties of the environment. Therefore, this expression for d is scaled with the constant $\alpha$ which thus may be said to represent environmental properties to yield:

$$d = \sqrt{\frac{I_m \cdot I}{4\pi}} \cdot \alpha$$

Denoting by $d_t$ the distance d measured at time t and identifying that f(t) = I is the function for the intensity yields the following expression for $d_t$:

$$d_t = \sqrt{\frac{I_m \cdot f(t)}{4\pi}} \cdot \alpha$$

If f(t) is a more complex light value (e.g. a HSB or XY value), then I(f(t)) may be advantageously used to extract the intensity from f(t). The constant $\alpha$ may be different for each light source, depending on the position of the light source and light distribution. The light distribution of the emitting light source 2a, 2b by determined by the detecting and receiving light source 2a, 2b by the emitting light source 2a, 2b broadcasting this information in a message embedded in its emitted coded light. Environmental properties may be determined, for example, in a calibration phase, such as darkroom calibration.

In a step S22 the detecting and receiving light source 2a, 2b may furthermore determines the time difference $\Delta t$ between lamp the detecting and receiving light source 2a, 2b and the light generating and emitting light source 2a, 2b within the spatially patterned dynamic flow (light effect pattern). In a step S24 the detecting and receiving light source 2a, 2b may then at a point in time $t_1$ generate a light value and synchronize its dynamic light value to emit $f(t_1 + \Delta t)$ and embed coded light message comprising a timestamp $t_1$ in its current light effect. The light driver of the detecting and receiving light source 2a, 2b may thus be arranged to receive information from its light decoder regarding the distance value and to adapt the light transmitted by the light emitter of the detecting and receiving light source 2a, 2b based on the distance.

In other words, by sending a coded light message, including the current time, from one light source to another, the receiving light source can measure the received light intensity at a predefined point within the received coded light message (*inter alia* after synchronization sequence). By using the time that is encoded in the transmitted coded light message, and the specification of the dynamic flow (light effect pattern) itself, the receiving light source can also calculate the intended light intensity of the sending light source and the difference between the received and intended intensity. The difference between the received intensity and the intended intensity for the encoded time gives an indication about the distance between the sending light source and the receiving light source when taking into account the intensity loss of light sources. This difference can be used by the receiving light source to determine its position in the dynamic flow (light effect pattern) relative to the position of the sending light source.

In general, the light source 2 thus comprises means (*inter alia* in the form of the light driver 5) to generate a light effect in accordance with a specification (*inter alia* dynamic function or light effect pattern), means (*inter alia* in the form of the light driver 5) to encode the value of its current light effect pattern within the light effect itself, means (*inter alia* in the form of the light emitter 6) to emit the coded light in the light effect pattern, means (*inter alia* in the form of the light detector 3) to receive the light effect of another light source, means (*inter alia* in the form of the light detector 3) to measure the light intensity of the received light effect, means (*inter alia*. in the form of the light decoder 4) to decode the encoded value from the received light effect, and means (*inter alia* in the form of the light decoder 4) to derive a light effect value from the encoded value, and means to determine elapsing of time (*inter alia* in the form of the light decoder 4).

The light source 2 may further comprises a message receiver 8 for receiving information, such as information relating to parameters of the light effect pattern and/or information relating to when to emit the coded light. The parameters of the light effect pattern may include the function of the light pattern itself, i.e. f(t). Information relating to parameters of the light effect pattern may advantageously be transmitted to the light source 2 in a broadcast message. Thereby, all light sources 2, 2a, 2b in the lighting system 1 may be provided with this information from one common transmission. The broadcast message may comprise information regarding instructions for one of the light sources 2, 2a, 2b in the lighting system 1 to start emitting a coded light message. This one light source 2, 2a, 2b may be randomly chosen from all the light sources 2, 2a, 2b in the lighting system 1. The transmission may utilize one of a plurality of different communications means. For example, the message receiver 8 may be a receiver configured to receive coded light. The message receiver 8 may comprise an infrared interface for receiving infrared light. Alternatively the message receiver 8 may be a radio receiver (i.e. radio based) for receiving wirelessly transmitted information. Yet alternatively the message receiver 8 may comprise a connector for receiving information transmitted by wire. The wire may be a powerline cable. The wire may be a computer cable.

The information relating to parameters of the light effect pattern may be transmitted to the light sources 2, 2a, 2b from *inter alia* the remote control unit 12. On receiving the information, the light sources 2, 2a, 2b may initialize their internal time indicator 10. The light sources 2, 2a, 2b will receive the information at substantially the same time (assuming that the distance between the remote control unit 12 and each light source 2, 2a, 2b is substantially the same), and therefore the receiving time difference can be ignored. The light sources 2, 2a, 2b may thereby be synchronized in time and thus have access to information regarding how the light effect pattern f(t) should be generated over time.

The light source 2, 2a, 2b may further comprise other components such as a processing unit 7 such as a central processing unit (CPU) and a memory 9. Information pertaining to the parameters of the light effect pattern and code parameters relating to the same may be stored in the memory 9.

As noted above, the lighting system 1 may comprise multiple light sources 2, 2a, 2b. To further improve the synchronization of the light effect pattern between the light sources 2, 2a, 2b, after establishing a position within the dynamic light scene based on the relative position from the first light source 2, 2a, 2b, each light source 2, 2a, 2b could continuously use also the received intensity of all other detected light source 2, 2a, 2b to successively and/or iteratively improve its relative position with respect to the other light source 2, 2a, 2b based *inter alia* on the mean relative position, between this light source 2, 2a, 2b and all other light sources 2, 2a, 2b. Thus, the above disclosed steps may be repeated with another one of the light sources 2, 2a, 2b acting as the first light source 2, 2a, 2b. In such a lighting system carrier sensing techniques could be used to avoid collision of the transmissions between the different light sources 2, 2a, 2b. Particularly, the light decoder may be arranged to determine distance values to emission points of each one of the multiple light sources, and from the distance values determine a mean placement value. The receiving light source thus calculates a placement in f(t) for each distance from the multiple light sources. These distance may in general be different. However the timestamps in the received messages from the multiple light source will also be different (each light source already has its own placement), meaning that with different distances and different timestamps, the placement of the receiving light source in f(t) will be more or less the same. The mean placement in f(t) based on the difference distances and different timestamps may thereby be determined.

The person skilled in the art realizes that the present invention by no means is limited to the preferred embodiments described above. On the contrary, many modifications and variations are possible within the scope of the appended claims. For example, the disclosed subject matter could also be used for light scenes that do not contain dynamics, but which do contain different light effects for different positions and/or locations in a room. A luminary 13 as illustrated in Fig. 3 may comprise at least one of the above disclosed light sources 2, 2a, 2b. Preferably the light sources of the luminary 13 are LED-based light sources. Fig. 4 illustrates a lighting system 14 comprising a plurality of such luminaries 13. The lighting system 14 may be associated with a common remote control unit 12, the functions of which are the same as disclosed above with reference to Fig. 1.

**Claims**

1. A light source (2, 2a, 2b) for a coded lighting system (1), comprising:

   a light detector (3) arranged to receive light and to determine a received intensity level $I_m$ of the received light; and
   a light decoder (4) having access to information pertaining to a light effect pattern f(t) and being arranged to:

   - from said received light, decode a coded light message embedded in said received light,
   - in said decoded coded light message identify a timestamp,
   - from said determined intensity level, said timestamp, and said information pertaining to said light effect pattern, determine a distance value to an emission point of said received light.

2. The light source according to claim 1, wherein the light decoder arranged to determine said distance value, determines said distance value such that it is proportional to said light effect pattern evaluated at a point in time $t_0$ defined by said timestamp and said determined received intensity level.

3. The light source according to claim 2, wherein the light decoder arranged to determine said distance value, determines said distance value such that at time t said distance value is determined as

$$d_t = \sqrt{\frac{I_m \cdot f(t)}{4\pi}} \cdot \alpha$$

where $\alpha$ is a constant.

4. The light source according to any one of claims 1-3, wherein said light source further comprises a light driver (5) and a light emitter (6) arranged to transmit light, wherein said light driver is arranged to receive information from said light decoder regarding said distance value and to adapt the light transmitted by said light emitter based on said distance.

5. The light source according to any one of claims 1-4, wherein said light decoder is further arranged to in said decoded coded light message identify information indicating an emitted intensity level of said received light and to use also this information to determine said distance value.

**6.** The light source according to any one of claims 1-5, further comprising an internal time indicator (10).

**7.** The light source according to claim 6, wherein said light decoder is arranged to, at a point in time of receiving said coded light message, compare said timestamp to an internal time indication of said internal time indicator.

**8.** The light source according to claim 6 or 7, wherein said internal time indicator is arranged to be initialized by reception of a signal from a central time indicator.

**9.** The light source according to any one of claims 1-8, further comprising a message receiver (8) arranged to receive parameters of said light effect pattern from a broadcast message.

**10.** The light source according to claim 9, wherein said message receiver is radio based.

**11.** The light source according to any one of claims 1-10, wherein said light detector is further arranged to receive light from multiple light sources, wherein said light decoder is further arranged to determine distance values to emission points of each one of said multiple light sources, and from said distance values determine a mean placement value for said light source.

**12.** A method for determining a distance value in a light source (2, 2a, 2b) for a coded lighting system (1), comprising:

receiving (S06) light and determining a received intensity level $I_m$ of said received light;
accessing (S08) information pertaining to a light effect pattern f(t);
decoding (S10), from said received light, a coded light message embedded in said received light;
identifying (S12) a timestamp in said decoded coded light message; and
determining (S20), from said determined intensity level, said timestamp, and said information pertaining to said light effect pattern, a distance value to an emission point of said received light.

**13.** A coded lighting system (1), comprising
a first light source (2, 2a, 2b), comprising:

- a light driver (5) arranged to form a coded light message, said coded light message comprising a timestamp, and
- a light emitter (6) placed at an emission point of the first light source and arranged to emit light according to a light effect pattern, said emitted light comprising said coded light message; and

a second light source (2, 2a, 2b), comprising:

- a light detector (3) arranged to receive said light and to determine a received intensity level $I_m$ of the received light; and
- a light decoder (4) having access to information pertaining to said light effect pattern and being arranged to:

∘ from said received light, decode said coded light message embedded in said received light,
∘ in said decoded coded light message identify said timestamp,
∘ from said determined intensity level, said timestamp, and said information pertaining to said light effect pattern, determine a distance value to said emission point of said received light.

**14.** The coded lighting system according to claim 13, wherein said light driver is further arranged to embed information relating to type of light source and/or direction of the light emitted by said light emitter in said coded light message.

**15.** The coded lighting system according to claim 13 or 14, wherein said first light source is further arranged to receive a message instructing said light driver to form said coded light message.

**Patentansprüche**

**1.** Lichtquelle (2, 2a, 2b) für ein codiertes Beleuchtungssystem (1), umfassend:

einen Lichtdetektor (3), der so eingerichtet ist, dass er Licht empfängt und einen empfangenen Intensitätslevel $I_m$ des empfangenen Lichts ermittelt; sowie
einen Lichtdecoder (4), der Zugriff auf ein Lichteffektmuster f(t) betreffende Informationen hat und so eingerichtet ist, dass er:

- aus dem empfangenen Licht eine in das empfangene Licht integrierte, codierte Lichtnachricht decodiert,
- in der decodierten, codierten Lichtnachricht einen Zeitstempel identifiziert,
- aus dem ermittelten Intensitätslevel, dem Zeitstempel und den das Lichteffektmuster betreffenden Informationen einen Abstandswert zu einem Emissionspunkt des empfangenen Lichts ermittelt.

2. Lichtquelle nach Anspruch 1, wobei der zur Ermittelung des Abstandswertes eingerichtete Lichtdecoder den Abstandswert so ermittelt, dass er proportional zu dem Lichteffektmuster, ausgewertet zu einem durch den Zeitstempel und den ermittelten, empfangenen Intensitätslevel definierten Zeitpunkt to, ist.

3. Lichtquelle nach Anspruch 2, wobei der zur Ermittlung des Abstandswertes eingerichtete Lichtdecoder den Abstandswert so ermittelt, dass zum Zeitpunkt t der Abstandswert ermittelt wird als

$$d_t = \sqrt{\frac{I_m \cdot f(t)}{4\pi}} \cdot \alpha$$

wobei $\alpha$ eine Konstante darstellt.

4. Lichtquelle nach einem der Ansprüche 1-3, wobei die Lichtquelle weiterhin einen Lichttreiber (5) und einen Lichtemitter (6) umfasst, der so eingerichtet ist, dass er Licht überträgt, wobei der Lichttreiber so eingerichtet ist, dass er Informationen von dem Lichtdecoder hinsichtlich des Abstandswertes empfängt und das von dem Lichtemitter übertragene Licht auf dem Abstand basierend anpasst.

5. Lichtquelle nach einem der Ansprüche 1-4, wobei der Lichtdecoder weiterhin so eingerichtet ist, dass er in der decodierten, codierten Lichtnachricht Informationen identifiziert, die einen emittierten Intensitätslevel des empfangenen Lichts anzeigen, und diese Informationen ebenfalls zur Ermittlung des Abstandswertes verwendet.

6. Lichtquelle nach einem der Ansprüche 1-5, weiterhin umfassend einen internen Zeitanzeiger (10).

7. Lichtquelle nach Anspruch 6, wobei der Lichtdecoder so eingerichtet ist, dass er zu einem Zeitpunkt des Empfangs der codierten Lichtnachricht den Zeitstempel mit einer internen Zeitanzeige des internen Zeitanzeigers vergleicht.

8. Lichtquelle nach Anspruch 6 oder 7, wobei der interne Zeitanzeiger so eingerichtet ist, dass er durch Empfang eines Signals von einem zentralen Zeitanzeiger initialisiert wird.

9. Lichtquelle nach einem der Ansprüche 1-8, weiterhin umfassend einen Nachrichtenempfänger (8), der so eingerichtet ist, dass er Parameter des Lichteffektmusters aus einer Broadcast-Message empfängt.

10. Lichtquelle nach Anspruch 9, wobei der Nachrichtenempfänger funkgestützt ist.

11. Lichtquelle nach einem der Ansprüche 1-10, wobei der Lichtdetektor weiterhin so eingerichtet ist, dass er Licht von mehreren Lichtquellen empfängt, wobei der Lichtdecoder weiterhin so eingerichtet ist, dass er Abstandswerte zu Emissionspunkten von jeder der mehreren Lichtquellen ermittelt und aus den Abstandswerten einen mittleren Platzierungswert für die Lichtquelle bestimmt.

12. Verfahren zum Ermitteln eines Abstandswertes in einer Lichtquelle (2, 2a, 2b) für ein codiertes Beleuchtungssystem (1), wonach:

Licht empfangen (S06) und ein empfangener Intensitätslevel $I_m$ des empfangenen Lichts ermittelt wird;
auf Informationen zugegriffen wird (S08), die ein Lichteffektmuster f(t) betreffen;
aus dem empfangenen Licht eine in das empfangene Licht integrierte, codierte Lichtnachricht decodiert wird (S10);
in der decodierten, codierten Lichtnachricht einen Zeitstempel identifiziert wird (S12); und
aus dem ermittelten Intensitätslevel, dem Zeitstempel und den das Lichteffektmuster betreffenden Informationen ein Abstandswert zu einem Emissionspunkt des empfangenen Lichts ermittelt wird (S20).

13. Codiertes Beleuchtungssystem (1), umfassend
eine erste Lichtquelle (2, 2a, 2b), umfassend:

- einen Lichttreiber (5), der so eingerichtet ist, dass er eine codierte Lichtnachricht erzeugt, wobei die codierte Lichtnachricht einen Zeitstempel umfasst, sowie
- einen Lichtemitter (6), der an einem Emissionspunkt der ersten Lichtquelle platziert und so eingerichtet ist, dass er Licht entsprechend einem Lichteffektmuster emittiert, wobei das emittierte Licht die codierte Lichtnachricht umfasst; sowie

eine zweite Lichtquelle (2, 2a, 2b), umfassend:

- einen Lichtdetektor (3), der so eingerichtet ist, dass er das Licht empfängt und einen empfangenen Intensitätslevel $I_m$ des empfangenen Lichts ermittelt; sowie
- einen Lichtdecoder (4), der Zugriff auf das Lichteffektmuster betreffende Informationen hat und so eingerichtet ist, dass er:

- aus dem empfangenen Licht die in das empfangene Licht integrierte, codierte Lichtnachricht decodiert,
- in der decodierten, codierten Lichtnachricht den Zeitstempel identifiziert,

- aus dem ermittelten Intensitätslevel, dem Zeitstempel und den das Lichteffektmuster betreffenden Informationen einen Abstandswert zu dem Emissionspunkt des empfangenen Lichts ermittelt.

14. Codiertes Beleuchtungssystem nach Anspruch 13, wobei der Lichttreiber weiterhin so eingerichtet ist, dass er Informationen, die auf den Lichtquellentyp und/oder die Richtung des von dem Lichtemitter emittierten Lichts bezogen sind, in die codierte Lichtnachricht integriert.

15. Codiertes Beleuchtungssystem nach Anspruch 13 oder 14, wobei die erste Lichtquelle weiterhin so eingerichtet ist, dass sie eine Nachricht empfängt, mit der der Lichttreiber angewiesen wird, die codierte Lichtnachricht zu erzeugen.

**Revendications**

1. Source de lumière (2, 2a, 2b) pour un système d'éclairage codé (1), comprenant :

   un détecteur de lumière (3) agencé pour recevoir de la lumière et déterminer un niveau d'intensité reçu $I_m$ de la lumière reçue ; et
   un décodeur de lumière (4) ayant accès à des informations appartenant à un motif d'effet lumineux f(t) et étant agencé pour :

   - à partir de ladite lumière reçue, décoder un message lumineux codé noyé dans ladite lumière reçue,
   - dans ledit message lumineux codé décodé, identifier une estampille temporelle,
   - à partir dudit niveau d'intensité déterminé, de ladite estampille temporelle et desdites informations appartenant audit motif d'effet lumineux, déterminer une valeur de distance à un point d'émission de ladite lumière reçue.

2. Source de lumière selon la revendication 1, dans laquelle le décodeur de lumière agencé pour déterminer ladite valeur de distance détermine ladite valeur de distance de sorte qu'elle soit proportionnelle audit motif d'effet lumineux évalué en un point du temps to défini par ladite estampille temporelle et ledit niveau d'intensité reçu déterminé.

3. Source de lumière selon la revendication 2, dans laquelle le décodeur de lumière agencé pour déterminer ledit valeur de distance détermine ladite valeur de distance de sorte qu'au temps t, ladite valeur de distance soit déterminée par :

$$d_t = \sqrt{\frac{I_m \cdot f(t)}{4\pi}} \cdot \alpha$$

où a est une constante.

4. Source de lumière selon l'une quelconque des revendications 1 à 3, dans laquelle ladite source de lumière comprend en outre un pilote de lumière (5) et un émetteur de lumière (6) agencés pour transmettre de la lumière, dans laquelle ledit pilote de lumière est agencé pour recevoir des informations dudit décodeur de lumière concernant ladite valeur de distance et adapter la lumière transmise par ledit émetteur de lumière sur la base de ladite distance.

5. Source de lumière selon l'une quelconque des revendications 1 à 4, dans laquelle ledit décodeur de lumière est en outre agencé pour, dans ledit message lumineux codé décodé, identifier des informations indiquant un niveau d'intensité émis de ladite lumière reçue et utiliser également ces informations pour déterminer ladite valeur de distance.

6. Source de lumière selon l'une quelconque des revendications 1 à 5, comprenant en outre un indicateur de temps interne (10).

7. Source de lumière selon la revendication 6, dans laquelle ledit décodeur de lumière est agencé pour, en un point du temps de réception dudit message lumineux codé, comparer ladite estampille temporelle à une indication de temps interne dudit indicateur de temps interne.

8. Source de lumière selon la revendication 6 ou 7, dans laquelle ledit indicateur de temps interne est agencé pour être initialisé par réception d'un signal issu d'un indicateur de temps central.

9. Source de lumière selon l'une quelconque des revendications 1 à 8, comprenant en outre un récepteur de message (8) agencé pour recevoir des paramètres dudit motif d'effet lumineux d'un message diffusé.

10. Source de lumière selon la revendication 9, dans lequel ledit récepteur de message est à base radio.

11. Source de lumière selon l'une quelconque des revendications 1 à 10, dans laquelle ledit détecteur de message est en outre agencé pour recevoir de la lumière de multiples sources de lumière, dans laquelle ledit décodeur de lumière est en outre agencé pour déterminer des valeurs de distance à des points d'émission de chacune desdites multiples sources de lumière et, à partir desdites valeurs de distance, déterminer une valeur de placement moyen pour ladite source de lumière.

12. Procédé de détermination d'une valeur de distance dans une source de lumière (2, 2a, 2b) pour un système d'éclairage codé (1), comprenant :

la réception (S06) de lumière et la détermination d'un niveau d'intensité reçu $I_m$ de ladite lumière reçue ;

l'accès (S08) à des informations appartenant à un motif d'effet lumineux f(t) ;

le décodage (S10), depuis ladite lumière reçue, d'un message lumineux codé noyé dans ladite lumière reçue ;

l'identification (S12) d'une estampille temporelle dans ledit message lumineux codé décodé ; et

la détermination (S20), depuis ledit niveau d'intensité déterminé, de ladite estampille temporelle et desdites informations appartenant audit motif d'effet lumineux, d'une valeur de distance à un point d'émission de ladite lumière reçue.

13. Système d'éclairage codé (1) comprenant :

une première source de lumière (2, 2a, 2b) comprenant :

- un pilote de lumière (5) agencé pour former un message lumineux codé, ledit message lumineux codé comprenant une estampille temporelle et

- un émetteur de lumière (6) placé en un point d'émission de la première source de lumière et agencé pour émettre de la lumière selon un motif d'effet lumineux, ledit émetteur de lumière comprenant ledit message lumineux codé ; et

une seconde source de lumière (2, 2a, 2b) comprenant :

- un détecteur de lumière (3) agencé pour recevoir ladite lumière et déterminer un niveau d'intensité reçu $I_m$ de la lumière reçue ; et

- un décodeur de lumière (4) ayant accès à des informations appartenant audit motif d'effet lumineux et agencé pour :

- à partir de ladite lumière reçue, décoder ledit message lumineux codé noyé dans ladite lumière reçue,

- dans ledit message lumineux codé décodé, identifier ladite estampille temporelle,

- à partir dudit niveau d'intensité déterminé, de ladite estampille temporelle et desdites informations appartenant audit motif d'effet lumineux, déterminer une valeur de distance audit point d'émission de ladite lumière reçue.

14. Système d'éclairage codé selon la revendication 13, dans lequel ledit pilote lumineux est en outre agencé pour noyer des informations se rapportant au type de source de lumière et/ou à la direction de la lumière émise par ledit émetteur de vitesse dans ledit message lumineux codé.

15. Système d'éclairage codé selon la revendication 13 ou 14, dans lequel ladite première source de lumière est en outre agencée pour recevoir un message instruisant ledit pilote lumineux de former ledit message lumineux codé.

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010035192 A1